# EUROPÄISCHE PATENTSCHRIFT

(11) **EP 3 443 449 B1**
(45) Veröffentlichungstag und Bekanntmachung des Hinweises auf die Patenterteilung: **08.03.2023**
(21) Anmeldenummer: 17714680.0
(22) Anmeldetag: 27.03.2017
(51) Int. Cl.: G06F 3/06

(54) **VERFAHREN, VORRICHTUNG UND COMPUTERPROGRAMM ZUM VERWALTEN EINES SPEICHERBEREICHS EINES STEUERGERÄTS EINES FAHRZEUGS**
METHOD, DEVICE, AND COMPUTER PROGRAM FOR MANAGING A STORAGE REGION OF A CONTROLLER OF A VEHICLE
PROCÉDÉ, DISPOSITIF ET PROGRAMME D'ORDINATEUR PERMETTANT DE GÉRER UNE ZONE DE MÉMOIRE D'UN APPAREIL DE COMMANDE D'UN VÉHICULE

(30) Priorität: 13.04.2016 DE 102016206207
(43) Veröffentlichungstag der Anmeldung: 20.02.2019
(73) Patentinhaber: Volkswagen Aktiengesellschaft, 38440 Wolfsburg (DE)
(72) Erfinder: GERLACH, Simon, 38527 Meine (DE); ZIERFUSS, André, 38102 Braunschweig (DE); WIETHÖLTER, Sven, 13437 Berlin (DE)
(86) Internationale Anmeldenummer: PCT/EP2017/057186
(87) Internationale Veröffentlichungsnummer: WO 2017/178214

(56) Entgegenhaltungen:
- US-A1- 2015 373 116

## Beschreibung

Die Erfindung bezieht sich auf ein Verfahren, eine Vorrichtung und ein Computerprogramm zum Verwalten eines Speicherbereichs eines Steuergeräts eines Fahrzeugs, genauer, aber nicht ausschließlich, basierend auf einem Auslagern von Daten aus dem Speicherbereich und Speichern von einem neuen benutzerspezifischen Datensatz nach dem Auslagern.

Eine Verbindung von Fahrzeugen mit Zentralstellen im Internet ist ein wichtiger Trend im Fahrzeugbau. Beispielsweise können so Einstellung des Fahrzeugs über das Internet aktualisiert werden, beispielsweise verfügbare Radiosender oder Navigationsdaten.

Ferner kann es wünschenswert sein, Einstellungen, die in einem Fahrzeug genutzt werden, beispielsweise Radiosender, Sitzposition, Navigationsziele o.Ä. zwischen Fahrzeugen zu übertragen. Dabei können in konventionellen Systemen beispielsweise Einstellungen über einen Festspeicher, etwa einen Flash-Speicher, übertragen werden, oder Dateien können in einem Benutzerprofil im Internet gespeichert werden und von dem Fahrzeug über eine Internetverbindung abgerufen werden. Dies kann dadurch erschwert werden, dass eine Speicherkapazität von Steuergeräten, um Benutzereinstellungen aufzunehmen, begrenzt sein kann. Beispielsweise können manche Steuergeräte lediglich eine geringe Zahl von benutzerspezifischen Datensätzen verschiedener Nutzer aufnehmen. Wird ein Fahrzeug von verschiedenen Nutzern regelmäßig genutzt, beispielsweise in einer Fahrzeugflotte eines Unternehmens oder im Car-Sharing, so können die Steuergeräte möglicherweise nicht alle Benutzereinstellungen der verschiedenen Nutzer aufnehmen.

US 2015/373116 A1 offenbart ein Verfahren für ein Mobilgerät, wie etwa ein Smartphone. Um eine effektive Speicherkapazität zu vergrößern, werden Daten des Mobilgeräts ständig auf einen zweiten Speicher hochgeladen. Wird nun Speicherbereich zum Speichern von neuen Daten benötigt, so werden Daten gelöscht, die bereits zuvor erfolgreich hochgeladen wurden. Es besteht der Bedarf nach einem verbesserten Konzept zum Speichern von Nutzereinstellungen für ein Fahrzeug. Diesem Bedarf wird durch das Verfahren, die Vorrichtung und das Computerprogramm gemäß den unabhängigen Ansprüchen Rechnung getragen. Verschiedene Beispiele beziehen sich auf ein Verfahren zum Verwalten eines Speicherbereichs eines zweiten Steuergeräts eines Fahrzeugs durch ein erstes Steuergerät des Fahrzeugs. Dabei überwacht das erste Steuergerät kontinuierlich eine verfügbare Speicherkapazität eines zweiten Steuergeräts des Fahrzeugs. Wird die verfügbare Speicherkapazität der Steuergeräte knapp, so kann das Verfahren beispielsweise Daten aus dem Speicherbereich des zweiten Steuergeräts auslagern, beispielsweise auf ein Speichermodul des ersten Steuergeräts, und beispielsweise anschließend neue benutzerspezifische Datensätze auf dem freigewordenen Speicherplatz im Speichermodul des zweiten Steuergeräts ablegen.

Ausführungsbeispiele schaffen ein Verfahren zum Verwalten eines Speicherbereichs eines zweiten Steuergeräts eines Fahrzeugs. Das Verfahren wird durch ein erstes Steuergerät des Fahrzeugs mittels kontinuierlicher Überwachung der verfügbaren Speicherkapazität des Speicherbereichs durchgeführt. Dabei sind in dem Speicherbereich ein oder mehrere benutzerspezifische, auf Anweisung des ersten Steuergeräts durch das zweite Steuergerät aktivierbare Benutzereinstellungen des Fahrzeugs enthaltende Datensätze speicherbar. Nach dem Erhalten eines neuen benutzerspezifischen Datensatzes umfasst das Verfahren die folgenden Schritte. Das Verfahren umfasst ein Auslagern von Daten aus dem Speicherbereich des Steuergeräts auf einen externen Speicher im Fahrzeug, falls die verfügbare Speicherkapazität zum Speichern des neuen benutzerspezifischen Datensatzes im Speicherbereich nicht ausreicht. Das Verfahren umfasst ferner, anschließend, ein Speichern des neuen benutzerspeizischen Datensatzes im Speicherbereich. Das Verfahren ermöglicht sowohl einen schnellen Wechsel zwischen benutzerspezifischen Datensätzen für benutzerspezifische Datensätze, die im Speicherbereich gespeichert sind als auch eine Nutzung einer Mehrzahl von benutzerspezifischen Datensätzen, für die der Speicherbereich nicht ausreicht. Ferner wird ein Austausch von benutzerspezifischen Datensätzen ermöglicht, ohne dass Daten des Speicherbereichs, in den der neue benutzerspezifischer Datensatz gespeichert wird, verloren gehen.

Das zweite Steuergerät wird hier beispielhaft für ein oder mehrere Steuergeräte genannt. Das Verfahren kann beispielsweise auch genutzt werden, um den Speicherbereich mehrerer zweiter Steuergeräte des Fahrzeugs zu verwalten, etwa durch Überwachen, Erhalten eines neuen benutzerspezifischen Datensatzes, Auslagern von Daten und Speichern des neuen benutzerspezifischen Datensatzes für ein oder mehreren Steuergeräte.

In einem bevorzugten Ausführungsbeispiel kann der Speicherbereich eine Mehrzahl von Speicherplätzen umfassen. Ein Speicherplatz kann beispielsweise Datenspeicher für einen Datensatz bieten. Das Verfahren kann ferner ein Auswählen eines Speicherplatzes der Mehrzahl von Speicherplätzen umfassen. Das Auslagern der Daten kann die Daten aus dem ausgewählten Speicherplatz auslagern. Das Speichern des neuen benutzerspezifischen Datensatzes kann den ausgewählten Speicherplatz nutzen. Das Nutzen von Speicherplätzen ermöglicht eine vereinfachte Verwaltung des verfügbaren Speicherplatzes. Das Auslagern der Daten aus einem Speicherplatz und anschließende Speichern des neuen benutzerspezifischen Datensatzes ermöglicht einen Austausch der Daten, ohne dass es zu Datenverlusten kommt.

In manchen Ausführungsbeispielen kann das Auswählen des Speicherplatzes auf zumindest einem Element der Gruppe von letzte Nutzung des benutzerspezifischen Datensatzes, der in dem Speicherplatz gespeichert ist, und Nutzungshäufigkeit des benutzerspezifischen Datensatzes, der in dem Speicherplatz gespeichert ist basieren. Das Auswählen des Speicherplatzes basierend auf den genannten Kriterien kann in manchen Ausführungsbeispielen die Notwendigkeit, Daten auszulagern, verringern, da beispielsweise häufig genutzte benutzerspezifische Datensätze nicht ausgelagert werden.

In einigen Ausführungsbeispielen kann das Überwachen der verfügbaren Speicherkapazität ein Überwachen einer Nutzung der Mehrzahl von Speicherplätzen umfassen. Die Überwachung der Nutzung kann beispielsweise einer Überwachung der Belegung der Speicherplätze oder eine Überwachung der Nutzungszeitpunkte oder -häufigkeiten der Speicherplätze umfassen. Das Überwachen der Speicherplätze ermöglicht eine verbessertes Auslagern der Daten aus dem Speicherplatz und/oder eine verbesserte Auswahl des Speicherplatzes.

In manchen Ausführungsbeispielen kann das Erhalten des neuen benutzerspezifischen Datensatzes ein Empfangen des neuen benutzerspezifischen Datensatzes von einem Server umfassen. Dies ermöglicht einen Abruf von benutzerspezifischen Datensätzen eines Nutzers, der das Fahrzeug bisher nicht oder länger nicht mehr genutzt hat. Alternativ oder zusätzlich kann das Erhalten des neuen benutzerspezifischen Datensatzes ein Abrufen des neuen benutzerspezifischen Datensatzes aus einer Datenstruktur, etwa einer Datenbank, einer Binärdatei oder einer Ordnerstruktur, umfassen. Das Abrufen des neuen benutzerspezifischen Datensatzes aus einer Datenstruktur ermöglicht eine Verwendung von vorher ausgelagerten oder präemptiv synchronisierten benutzerspezifischen Datensätzen.

In zumindest einigen Ausführungsbeispielen kann das Auslagern der Daten ferner ein Abrufen der Daten von dem Steuergerät und ein Speichern der Daten in einer Datenstruktur auf dem ersten Steuergerät umfassen. Dies ermöglicht ein Speichern der Daten auf einem zentralen Steuergerät, das beispielsweise ausgebildet sein kann, um große Datenmengen zu speichern, beispielsweise, wenn die Daten momentan nicht benötigt werden, und beispielsweise ein zurückspeichern in dem Steuergerät, wenn die Daten wieder benötigt werden.

In zumindest manchen Ausführungsbeispielen kann das Auslagern ferner periodisch durchgeführt werden. Alternativ oder zusätzlich kann das Auslagern ferner durchgeführt werden, wenn die Daten geändert wurden. Alternativ oder zusätzlich kann das Auslagern vor dem Speichern der Daten durchgeführt werden. Dies ermöglich beispielsweise eine Synchronisierung der Daten mit einer Zentralstelle, etwa durch ein zentrales Steuergerät. Ferner kann das Speichern möglicherweise durchgeführt werden, sobald der neue benutzerspezifischer Datensatz erhalten wurde, beispielsweise falls der ausgelagerte benutzerspezifische Datensatz nicht verändert wurde.

In einigen Ausführungsbeispielen kann das Verfahren ferner ein Aktivieren des neuen benutzerspezifischen Datensatzes für das Steuergerät umfassen. Das Aktivieren des benutzerspezifischen Datensatzes ermöglicht die Nutzung des benutzerspezifischen Datensatzes durch das Steuergerät.

Ausführungsbeispiele schaffen ferner ein Programm mit einem Programmcode zum Durchführen des Verfahrens gemäß einem der vorhergehenden Ansprüche, wenn der Programmcode auf einem Computer, einem Prozessor, einem Kontrollmodul oder einer programmierbaren Hardwarekomponente ausgeführt wird.

Ausführungsbeispiele schaffen ferner eine Vorrichtung für ein erstes Steuergerät eines Fahrzeugs, zum Verwalten eines Speicherbereichs eines zweiten Steuergeräts des Fahrzeugs. Die Vorrichtung umfasst eine Schnittstelle, ausgebildet zur Kommunikation mit dem zweiten Steuergerät. Die Vorrichtung umfasst ferner ein Kontrollmodul, ausgebildet zum Überwachen der verfügbaren Speicherkapazität des Speicherbereichs. Dabei wird das Überwachen der verfügbaren Speicherkapazität kontinuierlich durchgeführt. Das Kontrollmodul ist ferner ausgebildet zum Erhalten eines neuen benutzerspezifischen, auf Anweisung des ersten Steuergeräts durch das zweite Steuergerät aktivierbaren, Benutzereinstellungen des Fahrzeugs enthaltenden Datensatzes. Das Kontrollmodul ist ferner ausgebildet zum Auslagern von Daten aus dem Speicherbereich des Steuergeräts auf ein externes Speichermodul im Fahrzeug, falls die verfügbare Speicherkapazität zum Speichern des neuen benutzerspezifischen Datensatzes im Speicherbereich nicht ausreicht. Das Kontrollmodul ist ferner ausgebildet zum anschließenden Speichern des erhaltenen neuen benutzerspeizischen Datensatzes im Speicherbereich.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Flussdiagramm eines Ausführungsbeispiels eines Verfahrens zum Verwalten eines Speicherbereichs eines Steuergeräts eines Fahrzeugs;
- Fig. 1a: illustriert ein Blockdiagramm eines Ausführungsbeispiels einer Vorrichtung für ein erstes Steuergerät eines Fahrzeugs, zum Verwalten eines Speicherbereichs eines zweiten Steuergeräts des Fahrzeugs;
- Fig. 1b: illustriert ein Flussdiagramm eines weiteren Ausführungsbeispiels eines Verfahrens zum Verwalten eines Speicherbereichs eines Steuergeräts eines Fahrzeugs; und
- Fig. 2: zeigt eine beispielhafte Übersicht von Steuergeräten eines Fahrzeugs.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

In manchen konventionellen Fahrzeugen kann ein Benutzer eine von mehreren Sätzen von Benutzereinstellungen auswählen (z.B. bei Fahrzeugstart), die daraufhin aktiviert werden. Alle Einstellungen, die er fortan verändert, werden in diesem Satz von Benutzereinstellungen gespeichert. Dies kann verwendet werden, um einen Mehrbenutzerbetrieb im Fahrzeug zu ermöglichen oder um von einem Fahrer mehrere Profile zu nutzen.

Für diese Funktion müssen mehrere Einstellungssätze gespeichert werden. Die Einstellungen liegen meist verteilt in den Steuergeräten im Fahrzeug. Weil Speicherplatz in diesen Steuergeräten limitiert und teuer ist, können nur wenige Einstellungssätze gespeichert werden, typischerweise etwa 4 bis 8. Speicherplätze werden fortan auch als Slots bezeichnet. Es ist jedoch möglich, dass Fahrzeuge von mehr unterschiedlichen Nutzern (oder mit mehr Profilen) verwendet werden, als Slots in den Steuergeräten vorgehalten sind. Das ist insbesondere z.B. bei Mietwagen, Poolfahrzeugen, Carsharing etc. der Fall.

Sobald nun ein neuer Nutzer ein solches Fahrzeug verwenden möchte (oder ein Nutzer ein neues Profil verwenden möchte), und bereits alle Slots belegt sind, muss er Einstellungssätze anderer Nutzer überschreiben. I.d.R. muss er hierfür in konventionellen Systemen den zu überschreibenden Slot manuell auswählen. Teilweise können Einstellungssätze z.B. auf Wechselmedien oder in die Cloud exportiert werden und daraus wiederhergestellt werden.

Die vorherigen Einstellungen im überschriebenen Slot gehen verloren. Selbst wenn diese über Wechselmedien oder der Cloud wiederhergestellt werden können, dann ist dies aufwändig/unkomfortabel, kostet Datenvolumen oder zumindest Zeit für die Wiederherstellung. Zudem kann ein neuer Nutzer oftmals nicht entscheiden, welcher Slot sinnvollerweise überschrieben werden sollte, da er nicht weiß, wann/ob welcher andere Nutzer vermutlich das Fahrzeug erneut nutzen wird.

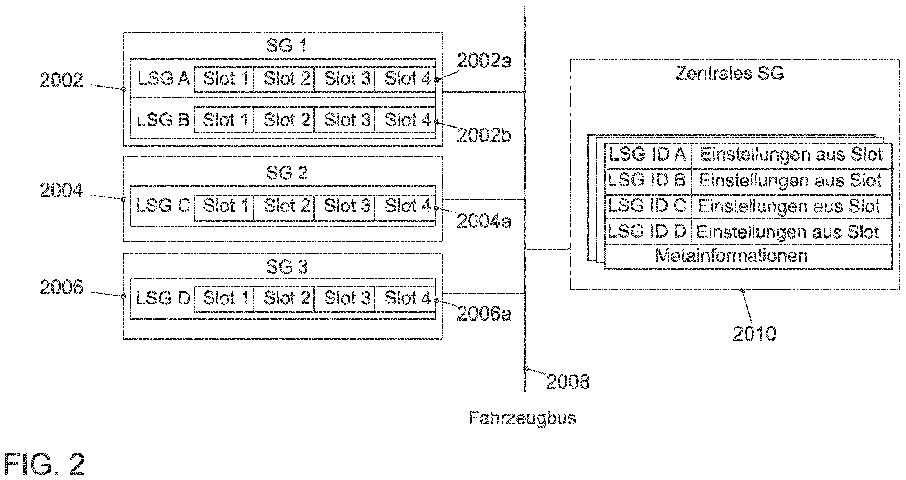

In zumindest manchen Ausführungsbeispielen kann ein zentrales Steuergerät (SG) mit viel (billigem) Speicherplatz Einstellungssätze (benutzerspezifische Datensätze) und verfügbare Speicherplätze (auch engl. Memory Slots, kurz Slots) in den anderen Steuergeräten verwalten. Fig. 2 zeigt eine beispielhafte Übersicht. Steuergeräte 2002; 2004; 2006 mit logischen Steuergeräten (LSG) 2002a; 2002b; 2004a; 2006a umfassen mehrere Bänke (Speicherplätze, Slots) von benutzerspezifischen Datensätzen mit Einstellwerten des jeweiligen LSGs. Die LSGs sind beispielsweise über LSG-Identifikatoren adressierbar und unabhängig von einer physikalischen Verortung. Beispielsweise kann ein Kontrollmodul oder Prozessor ausgebildet sein, um mehrere LSGs auszuführen. Die Steuergeräte sind über einen Fahrzeugbus 2008 mit einem Zentralen Steuergerät 2010 gekoppelt, das eine Datenstruktur mit einer Mehrzahl von benutzerspezifischen Datensätzen umfasst, beispielsweise als Benutzer-Profile (Sätze von benutzerspezifischen Datensätzen für mehrere LSGs) in der Auslagerung und zusätzlichen Metainformationen. Diese Verwaltung kann beispielsweise mit Hilfe der Metainformationen zu den Einstellungssätzen, den LSG-Identifikatoren und Busnachrichten erfolgen, um auf diese Weise die Menge der verfügbaren Einstellungssätze stark zu erhöhen, ohne dafür mehr Speicherplatz oder Slots in den SG vorhalten zu müssen.

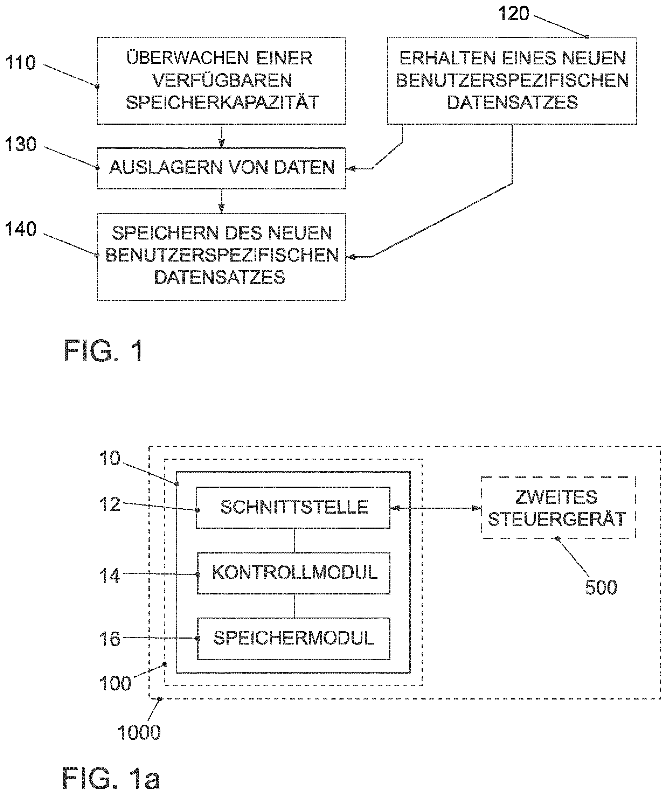

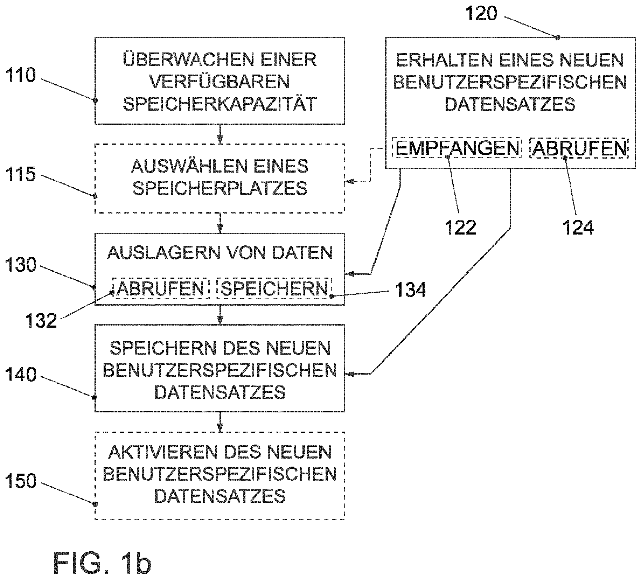

Dieses zentrale SG kann dazu beispielsweise per Busnachricht die anderen SG kontrollieren, die die Einstellungssätze in ihren Slots speichern, etwa durch Überwachen 110 aus Fig. 1. Dazu kann es diese anweisen, den Inhalt dieser Einstellungen eines bestimmten Slots auf den Fahrzeugbus zu legen (etwa in einem Verfahrensschritt Auslagern 130 aus Fig. 1) oder Einstellungen vom Fahrzeugbus in einem bestimmten Slot zu speichern (etwa durch Speichern 140 aus Fig. 1). Außerdem kann es die SG anweisen, den Einstellungssatz in einem Slot zu aktivieren, etwa durch Aktivieren 150 aus Fig. 1b.

Das zentrale SG kann die verfügbaren Slots derartig verwalten (etwa im Überwachen 110), dass die derzeit verwendeten Einstellungssätze stets in einem Slot geladen und aktiviert sind. Wenn ein Einstellungssatz aktiviert werden soll, der derzeit nicht in einem Slot geladen ist, kann das zentrale SG dafür sorgen, dass dieser in einen automatisch (etwa durch Auswählen 115 aus Fig. 1b) in einen bestimmten Slot geladen wird, ohne dass dabei die zuvor in diesem Slot gespeicherten Einstellungssätze verloren gehen. Diese können dafür zuvor in das Speichermodul des zentralen SG "ausgelagert" werden (etwa durch Auslagern 130). Einstellungssätze in dieser Auslagerung können in manchen Ausführungsbeispielen jederzeit wieder aktiviert werden, indem sie aus dem zentralen SG wieder in einen Slot der anderen SG geladen werden, etwa durch Speichern 140. Der dafür verwendete Slot wurde zuvor ggf. erneut durch Auslagerung frei gemacht.

Fig. 1 illustriert ein Flussdiagramm eines Ausführungsbeispiels eines Verfahrens zum Verwalten eines Speicherbereichs eines Steuergeräts eines Fahrzeugs 1000. Der Speicherbereich kann beispielsweise einem computerlesbaren und beschreibbaren Speichermodul entsprechen, das ausgebildet sein kann, um Einstellungen des Steuergeräts zu speichern. Das Steuergerät kann beispielsweise einem von mehreren Steuergeräten des Fahrzeugs 1000 entsprechen, beispielsweise ausgebildet zum Steuern einer Fahrzeugfunktion, beispielsweise zum Steuern von Fahrzeugklimafunktionen, Sitzeinstellungen oder Einstellungen von Unterhaltungselektronik. Das Steuergerät kann beispielsweise auch einem logischen Steuergerät entsprechen, beispielsweise zum Steuern einer Fahrzeugfunktion in einem Kontrollmodul, das mehrere logische Steuergeräte umfassen oder ausführen kann. In dem Speicherbereich sind ein oder mehrere benutzerspezifische Datensätze speicherbar. Die benutzerspezifischen Datensätze umfassen beispielsweise Benutzereinstellungen für das Steuergerät, beispielsweise die Einstellungen, die durch den Nutzer eingestellt wurden. Die ein oder mehreren benutzerspezifischen Datensätze können in manchen Ausführungsbeispielen in ein oder mehreren Benutzer-Profilen umfasst sein, wobei ein Benutzer-Profil benutzerspezifische Datensätze für ein oder mehrere Steuergeräte umfassen kann. Der Speicherbereich umfasst beispielsweise Speicherplätze oder Unter-Speicherbereiche für ein oder mehrere benutzerspezifische Datensätze. Die benutzerspezifischen Datensätze können beispielsweise eine feste Größe aufweisen und als Bitvektor oder in einem definierten Protokoll vorliegen. Die benutzerspezifischen Datensätze können in manchen Ausführungsbeispielen ferner ein oder mehrere Komponenten umfassen, die eine feste oder variable Größe aufweisen können.

Fig. 1a illustriert ein Blockdiagramm eines Ausführungsbeispiels einer Vorrichtung 10 für ein erstes Steuergerät 100 des Fahrzeugs 1000 zum Verwalten eines Speicherbereichs eines zweiten Steuergeräts 500 des Fahrzeugs 1000, ausgebildet zum Ausführen des Verfahrens. Das zweite Steuergerät 500 kann beispielsweise dem Steuergerät, dessen Speicher verwaltet wird, aus der Beschreibung des Verfahrens von Fig. 1 entsprechen. Die Vorrichtung umfasst eine Schnittstelle, ausgebildet zum Kommunikation mit dem zweiten Steuergerät 500. Die Vorrichtung umfasst ferner ein Kontrollmodul 14, ausgebildet zum Ausführen der Verfahrensschritte, etwa der Verfahrensschritte 110-150. Die Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die Schnittstelle 12 kann beispielsweise ausgebildet sein zum Kommunizieren über einen Kontroll-Netzwerk-Bus (auch engl. Controller Area Network Bus, CAN Bus) oder ein lokales Verbindungsnetzwerk (auch engl. Local Interconnect Network, LIN), zur Kommunikation mit dem zweiten Steuergerät 500. In Ausführungsbeispielen kann das Kontrollmodul 14 einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14 denkbar.

Das Verfahren umfasst Überwachen 110 einer verfügbaren Speicherkapazität des Speicherbereichs. Beispielsweise kann das Überwachen 110 ein Überwachen einer Belegung von ein oder mehreren Speicherplätzen für die benutzerspezifischen Datensätze umfassen. Beispielsweise kann das Überwachen 110 eine Nutzung der benutzerspezifischen Datensätze überwachen, beispielsweise eine Nutzungshäufigkeit, eine Nutzungsdauer oder ein Zeitpunkt der Nutzung. Das Überwachen 110 kann dem genutzten Speicher in manchen Ausführungsbeispielen Benutzer-Profile verschiedener Nutzer zuordnen. Beispielsweise kann das Überwachen 110 zuordnen, in welchem Teil oder Speicherplatz des Speicherbereichs Daten eines Benutzerprofils gespeichert sind.

Das Verfahren umfasst ferner Erhalten 120 eines neuen benutzerspezifischen Datensatzes. In manchen Ausführungsbeispielen, wie in Fig. 1b gezeigt, kann das Erhalten 120 des neuen benutzerspezifischen Datensatzes ein Empfangen 122 des neuen benutzerspezifischen Datensatzes von einem Server umfassen, beispielsweise über eine mobile Internetverbindung zwischen dem Fahrzeug 1000 und dem Server. Beispielsweise kann das Kontrollmodul 14 ausgebildet sein, über die Schnittstelle 12 und/oder einen Sendeempfänger für ein Mobilfunksystem mit dem Server zu kommunizieren. Das Kontrollmodul 14 kann beispielsweise ausgebildet sein, über zumindest ein Mobilfunksystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution, und ein Mobilfunksystem der 5. Generation (5G) mit dem Server zu kommunizieren. Das Fahrzeug 1000 kann beispielsweise ein Sendeempfängermodul für zumindest eines der Mobilfunksysteme umfassen. Der Server kann beispielsweise einem an ein Netzwerk angeschlossenen Computersystem entsprechen, beispielsweise einem einzelnen Server, einem virtuellen Server, einer Cloud-Serverinstanz oder zumindest einem Teil eines Rechenzentrums.

Alternativ oder zusätzlich kann das Erhalten 120 des neuen benutzerspezifischen Datensatzes, wie ferner in Fig. 1b gezeigt, ein Abrufen 124 des neuen benutzerspezifischen Datensatzes aus einer Datenstruktur umfassen. Die Datenstruktur kann beispielsweise einer Datenbank, einer Dateibasierten Datenstruktur, einem Speicherarray, einer Liste oder einer ähnlichen Datenstruktur entsprechen. Beispielsweise kann die Datenstruktur ein oder mehrere Benutzer-Profile umfassen, und das Abrufen 124 kann ein Auslesen des benutzerspezifischen Datensatzes aus einem der ein oder mehreren Benutzer-Profile umfassen. Das Kontrollmodul 14 kann beispielsweise ausgebildet sein, um die Datenstruktur auszulesen und/oder benutzerspezifische Datensätze in der Datenstruktur zu speichern. Die Vorrichtung umfasst ferner ein Speichermodul 16, ausgebildet zum Speichern der Datenstruktur. Beispielsweise kann das Abrufen 122 ferner ein Speichern des neuen benutzerspezifischen Datensatzes in der Datenstruktur umfassen.

Das Verfahren umfasst ferner Auslagern 130 von Daten aus dem Speicherbereich des Steuergeräts auf einen externen Speicher, falls die verfügbare Speicherkapazität zum Speichern des neuen benutzerspezifischen Datensatzes im Speicherbereich nicht ausreicht. Das Auslagern 130 kann in einigen Ausführungsbeispielen einem Exportieren der Daten entsprechen oder dieses umfassen. In manchen Ausführungsbeispielen kann das Auslagern 130 nach dem Erhalten des benutzerspezifischen Datensatzes ausgeführt werden. Alternativ oder zusätzlich kann das Auslagern 130 ferner periodisch durchgeführt werden, beispielsweise auch vor dem Erhalten 120. Das Auslagern 130 kann beispielsweise ferner durchgeführt werden, wenn die Daten im Speicherbereich geändert wurden, beispielsweise nach einer Wartezeit, in der auf weitere Änderungen gewartet wird, etwa nach leichter Verzögerung nach einer Bedienhandlung, um die Anzahl Nachrichten bei schneller Aufeinanderfolge von Bedienhandlungen zu reduzieren. Die Verzögerung kann in manchen Ausführungsbeispielen eine Obergrenze von wenigen Sekunden nicht überschreiten. In manchen Ausführungsbeispielen kann das Auslagern 130 ferner ein Überprüfen, ob die Daten seit dem letzten Auslagern 130 geändert wurden umfassen, beispielsweise durch einen Vergleich von Zeitstempels oder basierend auf einem Dirty-Flag. Die Änderung kann beispielsweise durch eine Benachrichtigung über eine Änderung des benutzerspezifischen Datensatzes (auch engl. Dirty-Notification) angezeigt werden, und/oder der benutzerspezifischer Datensatz im Speicherbereich kann einen Wert umfassen, der anzeigt, dass es seit dem letzten Auslagern geändert wurde (sog. Dirty-Flag).

In manchen Ausführungsbeispielen kann das Auslagern 130 beispielsweise kein Löschen des benutzerspezifischen Datensatzes umfassen. Beispielsweise kann das Speichern 140 ein Überschreiben des vorherigen benutzerspezifischen Datensatzes oder ein Löschen des Teils des Speicherbereichs vor dem Speichern des neuen benutzerspezifischen Datensatzes umfassen. Alternativ kann das Auslagern 130 in manchen Ausführungsbeispielen auch ein Löschen des ausgelagerten benutzerspezifischen Datensatzes im Speicherbereich umfassen.

Das Auslagern 130 der Daten kann beispielsweise, wie in Fig. 1b gezeigt, ferner ein Abrufen 132 der Daten von dem Steuergerät 500 und ein Speichern 134 der Daten in der Datenstruktur auf einem zentralen Steuergerät 100 des Fahrzeugs 1000 umfassen. Das zentrale Steuergerät kann beispielsweise dem ersten Steuergerät 100 von Fig. 1a entsprechen. Das Kontrollmodul 14 kann beispielsweise ausgebildet sein zum Abrufen 132 der Daten und zum Speichern 134 der Daten auf dem Speichermodul 16. Das Abrufen 132 kann beispielsweise über die Schnittstelle 12 und über einen Fahrzeugbus des Fahrzeugs ausgeführt werden. Das Speichermodul 16 kann beispielsweise zumindest ein Element der Gruppe von computerlesbares Speichermedium, magnetisches Speichermedium, optisches Speichermedium, Festplatte, Flash-Speicher, Diskette, Zufallszugriffsspeicher (auch engl. Random Access Memory), Programmable Read Only Memory (PROM), Erasable Programmable Read Only Memory (EPROM), und Electronically Erasable Programmable Read Only Memory (EEPROM) umfassen. Beispielsweise kann das Speichermodul 16 ausgebildet sein, um einen Speicherbereich zum Speichern der Datenstruktur bereitzustellen, der größer ist als der Speicherbereich des zweiten Steuergeräts 500.

Das Verfahren umfasst ferner ein Speichern 140 des neuen benutzerspezifischen Datensatzes im Speicherbereich. Das Speichern 140 kann beispielsweise ein Bereitstellen des neuen benutzerspezifischen Datensatzes über die Schnittstelle 12, etwa über den Fahrzeugbus, für das zweite Steuergerät 500 umfassen, beispielsweise zusammen mit Kontrollanweisungen zum Speichern des neuen benutzerspezifischen Datensatzes. In einem bevorzugten Ausführungsbeispielen kann das Auslagern 130 vor dem Speichern 140 der Daten durchgeführt werden.

In manchen Ausführungsbeispielen kann das Verfahren, wie in Fig. 1b gezeigt, ferner Aktivieren 150 des neuen benutzerspezifischen Datensatzes für das Steuergerät 500 umfassen. Das Kontrollmodul 14 kann beispielsweise ausgebildet sein, um ein Steuersignal über die Schnittstelle 12 zum Aktivieren 150 für das Steuergerät 500 bereitzustellen.

Das Steuergerät 500 steht in einem bevorzugten Ausführungsbeispiel beispielhaft für ein Steuergerät einer Mehrzahl von Steuergeräten. Das Überwachen 110 kann beispielsweise ein Überwachen einer Mehrzahl von Speicherbereichen der Mehrzahl von Steuergeräten umfassen. Das Erhalten 120 kann ein Erhalten eines Benutzer-Profils umfassen, welches benutzerspezifische Datensätze für die Mehrzahl von Steuergeräten umfassen kann. Das Auslagern 130 kann beispielsweise die Daten periodisch für zumindest eine Teilmenge der Mehrzahl von Steuergeräten auslagern. Beispielsweise können Daten eines Benutzer-Profils zusammen ausgelagert 130 werden. Das Speichern 140 kann beispielsweise benutzerspezifische Datensätze eines Benutzer-Profils in der Mehrzahl von Steuergeräten speichern.

In einem bevorzugten Ausführungsbeispiel kann der Speicherbereich eine Mehrzahl von Speicherplätzen umfassen. Ein Speicherplatz kann beispielsweise einem reservierten Unter-Speicherbereich entsprechen, der Speicherplatz für einen benutzerspezifischer Datensatz bietet. Das Überwachen 110 der verfügbaren Speicherkapazität kann beispielsweise ein Überwachen einer Nutzung der Mehrzahl von Speicherplätzen umfassen. Das Verfahren kann, wie in Fig. 1b gezeigt, ferner Auswählen 115 eines Speicherplatzes der Mehrzahl von Speicherplätzen umfassen. Das Auslagern 130 der Daten kann die Daten aus dem ausgewählten Speicherplatz auslagern. Das Speichern 140 des neuen benutzerspezifischen Datensatzes kann den ausgewählten, und beispielsweise zuvor ausgelagerten, Speicherplatz nutzen.

In zumindest manchen Ausführungsbeispielen kann das Auswählen 115 des Speicherplatzes auf zumindest einem Element der Gruppe von letzte Nutzung des benutzerspezifischen Datensatzes, der in dem Speicherplatz gespeichert ist, und Nutzungshäufigkeit des benutzerspezifischen Datensatzes, der in dem Speicherplatz gespeichert ist, basieren.

In einem beispielhaften Ausführungsbeispiel ist das Kontrollmodul 14 beispielsweise ausgebildet, verschiedene Metainformationen pro benutzerspezifischem Datensatz zu halten, beispielsweise
▪ Zuordnung der Datensätze zu Benutzer-Profilen
▪ Nummer des Slots in den der Einstellungssatz geladen ist oder leer ▪ Zeitpunkt der letzten Nutzung
▪ Gesamtanzahl Nutzungen
▪ Gesamtdauer Aktivierung
▪ Zeitpunkte/-orte vorherige Aktivierungen (Wochentag, Zeit, GPS-Position...)
▪ Prioritäts-Flag, Nie-Auslagern Flag

Mögliche Strategien zum Auswählen 115 des auszulagernden Slots aus der Menge aller derzeit in Slots geladenen benutzerspezifischen Datensätze orientieren sich beispielsweise an folgenden Parametern (Beispiele):
▪ der längste Nichtnutzung
▪ der seltensten Nutzungshäufigkeit
▪ der kürzesten Aktivierungsdauer

Diese Parameter können jeweils absolut erhoben werden, nur für aktuellen Nutzer, nur für den am längsten nicht das Fahrzeug verwendeten Nutzer, am aktuellen/ähnlichen Ort, zu ähnlichen Zeitpunkten, innerhalb eines bestimmten Zeitraums wie z.B. der letzten 2 Wochen etc.

Sobald das Speichermodul im zentralen SG auch voll belegt ist, kann bei Auslagerung eines weiteren Einstellungssatzes automatisch ein anderer Einstellungssatz bestimmt, der dann vergessen wird ("Verdrängung"). Die o.g. Strategien können beispielsweise auch für das Verdrängen der benutzerspezifischen Datensätze aus der Datenstruktur genutzt werden. Dabei kann ferner beachtet werden, ob ein benutzerspezifischer Datensatz von einem Server wiederherstellbar ist.

Bevor der in einem Slot befindliche benutzerspezifische Datensatz überschrieben werden kann (etwa durch Speichern 140), kann in manchen Ausführungsbeispielen überprüft werden, dass er im zentralen SG ausgelagert 130 wurde. Dazu kann dieses die übrigen SG über den Fahrzeugbus anweisen, den Inhalt des Slots über den Fahrzeugbus zu exportieren, etwa durch Auslagern 130. Dies kann beispielsweise zu verschiedenen Zeitpunkten geschehen:
▪ periodisch
▪ nach einer Änderung an dem Inhalt des Slots
▪ spätestens vor dem Überschreiben

Das zentrale SG kann damit erst bei Bedarf eine Auslagerung der vorherigen Einstellungssätze erzeugen (wenn der Slot tatsächlich überschrieben werden soll) oder aber auch ständig den Inhalt des Slots halten (dauerhafte Schattenkopie).

Die Auslagerung kann in manchen Ausführungsbeispielen bevorzugt nach absolut längster Nichtnutzung aller Einstellungssätze und die Verdrängung bevorzugt nach längster Nichtnutzung und Möglichkeit zur Wiederherstellung aus der Cloud durchgeführt werden. In manchen Ausführungsbeispielen kann eine dauerhafte Schattenkopie im zentralen SG durch Auslagern nach Änderungen an den Speicherplätzen gehalten werden.

Das Auswählen 115 kann beispielsweise ein Ermitteln eines zu verdrängenden Slots umfassen, z.B. durch Suchen des benutzerspezifischen Datensatzes, das am längsten nicht benutzt wurde und derzeit in einen Slot geladen ist. Dazu kann beispielsweise über die Benutzer-Profile in der Datenstruktur (Profilverwaltung) iteriert werden. Das Verfahren kann ferner überprüfen, dass der benutzerspezifische Datensatz in der zentralen Profilverwaltung (Datenstruktur) der aktuellen Fassung des benutzerspezifischen Datensatzes im Slot des Speicherbereichs entspricht, etwa durch einen Vergleich oder durch Auslagern 130. Ist die Fassung aktuell (wenn also nach der letzten Änderung eine erfolgreiche Auslagerung geschehen ist), so kann der Slot verdrängt werden, die Zuordnung zum Slot im Benutzer-Profil in der Profilverwaltung gelöscht werden und die freigemachte Slot-Nummer zurückgegeben werden.

In einer beispielhaften Implementierung kann das Kontrollmodul 14 beispielsweise ausgebildet sein, um eine Funktion zum Exportieren von Daten aus einem Slot auszuführen, etwa das Auslagern 130. Beispielsweise kann ein Dirty-Flag anzeigen, ob die Daten seit dem Speichern im Speicherbereich geändert wurden. Wurden sie nicht geändert, so kann das Auslagern 130 beispielsweise Daten nutzen, die in der Datenstruktur gespeichert sind, sonst kann das Auslagern 130 beispielsweise die Daten über den Fahrzeugbus übertragen. Das Dirty-Flag kann nach einem erfolgreichen Auslagern 130 in manchen Ausführungsbeispielen gelöscht werden. Es kann dadurch beispielsweise auf eine Benachrichtigung über eine Änderung des benutzerspezifischen Datensatzes (sog. Dirty-Notification) verzichtet werden. In manchen Ausführungsbeispielen kann ferner der Slot auf die Werkseinstellungen zurückgesetzt werden. Ist der Slot derzeit aktiv, so können die Werkseinstellungen unmittelbar angewendet werden.

In manchen Ausführungsbeispielen kann das Auslagern 130 ferner vor dem Herunterfahren eines Steuergeräts ausgeführt werden, beispielsweise wenn das Dirty-Flag für einen Speicherplatz gesetzt ist. Das Kontrollmodul 14 kann bei Empfang der Nachricht in dieser Situation implizit annehmen, dass das Dirty-Flag zuvor gesetzt war, auch wenn er bisher noch keine Dirty-Notification erhalten hat.

Beispielsweise kann das Kontrollmodul 14 ausgebildet sein, um über einen Fahrzeugbus (etwa als Broadcast) abzufragen, für welche LSG Dirty-Flags gesetzt sind, und diese beispielsweise als Dirty-Notification von den LSG als Antwort auf die Abfrage erhalten, etwa nach einem Neustart der Vorrichtung 10. Alternativ oder zusätzlich können die LSG ausgebildet sein, um bei einer Änderung der Benutzereinstellungen automatisch eine Dirty-Notification bereitzustellen.

Nach erfolgreichem Export (Quittierung der Gegenstelle) kann das Dirty Flag anschließend im SG gelöscht werden.

Bei der Einlagerung (etwa durch das Speichern 140) kann beispielsweise über alle Steuergeräte (etwa LSGs) iteriert werden und ihnen ein aktualisierter Datensatz (der neue benutzerspezifische Datensatz) über eine Import-Funktion bereitgestellt werden. Ist der

Import in allen LSGs abgeschlossen, so kann der Datensatz aktiviert werden, beispielsweise durch Iterieren des Schritts 150 für alle LSGs oder durch eine Broadcast Nachricht. Zusätzlich kann eine Zuordnung zwischen Benutzer-Profil und Slot in der Profilverwaltung gespeichert werden, beispielsweise als Feld in der Datenstruktur. Das Kontrollmodul 14 kann beispielsweise ausgebildet sein, den neuen benutzerspezifischen Datensatz zum Steuergerät (oder LSG) zu senden, um dieses dort zu importieren. Dies kann beispielsweise durch eine Datenimport-Funktionalität, die den benutzerspezifischen Datensatz in einem temporären Importpuffer lädt und eine Funktionalität zum Übernehmen der Benutzereinstellungen aus dem Importpuffer in einen Slot implementiert sein. Nach dem Import kann das Dirty-Flag beispielsweise gelöscht und/oder eine Dirty-Notification bereitgestellt werden. Sind die Benutzereinstellungen importiert, so können diese aktiviert werden.

Ausführungsbeispiele ermöglichen eine Erweiterung auf theoretisch nahezu unbegrenzte Anzahl unterschiedlicher verwendbarer Einstellungssätze in einem Fahrzeug, ohne dass ein Speichermodul in den beteiligten SG erweitert werden muss.

In zumindest manchen Ausführungsbeispielen könnte das Fahrzeug 1000 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen. Das Kontrollmodul 14 ist mit der Schnittstelle 12 und dem Speichermodul 16 gekoppelt.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt ist.

### Bezugszeichenliste

- 10: Vorrichtung
- 12: Schnittstelle
- 14: Kontrollmodul
- 16: Speichermodul
- 100: Steuergerät
- 110: Überwachen einer verfügbaren Speicherkapazität
- 115: Auswählen eines Speicherplatzes
- 120: Erhalten eines neuen benutzerspezifischen Datensatzes
- 122: Empfangen eines neuen benutzerspezifischen Datensatzes
- 124: Abrufen eines neuen benutzerspezifischen Datensatzes
- 130: Auslagern von Daten
- 132: Abrufen von Daten
- 134: Speichern von Daten in Datenstruktur
- 140: Speichern des neuen benutzerspezifischer Datensatzes im Steuergerät
- 150: Aktivieren des neuen benutzerspezifischen Datensatzes
- 500: Steuergerät
- 1000: Fahrzeug
- 2002; 2004; 2006: Steuergeräte
- 2002a; 2002b; 2004a; 2006a: Logische Steuergeräte
- 2008: Fahrzeugbus
- 2010: Zentrales Steuergerät

## Patentansprüche

1. Verfahren zum Verwalten eines Speicherbereichs eines zweiten Steuergeräts (500) eines Fahrzeugs (1000), wobei das Verfahren durch ein erstes Steuergerät (100) des Fahrzeugs mittels kontinuierlicher Überwachung (110) der verfügbaren Speicherkapazität des Speicherbereichs durchgeführt wird, wobei in dem Speicherbereich ein oder mehrere benutzerspezifische, auf Anweisung des ersten Steuergeräts durch das zweite Steuergerät aktivierbare Benutzereinstellungen des Fahrzeugs enthaltende Datensätze speicherbar sind, wobei das Verfahren nach dem Erhalten (120) eines neuen benutzerspezifischen Datensatzes die nachfolgenden Schritte umfasst:
Auslagern (130) von Daten aus dem Speicherbereich des zweiten Steuergeräts auf einen externen Speicher im Fahrzeug, falls die verfügbare Speicherkapazität zum Speichern des neuen benutzerspezifischen Datensatzes im Speicherbereich nicht ausreicht, wobei das Auslagern (130) nach dem Erhalten des neuen benutzerspezifischen Datensatzes ausgeführt wird; und
anschließendes Speichern (140) des neuen benutzerspezifischen Datensatzes im Speicherbereich.

2. Das Verfahren gemäß einem der vorhergehenden Ansprüche, wobei der Speicherbereich eine Mehrzahl von Speicherplätzen umfasst, wobei ein Speicherplatz Speicher für einen Datensatz bietet, ferner umfassend Auswählen (115) eines Speicherplatzes der Mehrzahl von Speicherplätzen, wobei das Auslagern (130) der Daten die Daten aus dem ausgewählten Speicherplatz auslagert und wobei das Speichern (140) des neuen benutzerspezifischen Datensatzes den ausgewählten Speicherplatz nutzt.

3. Das Verfahren gemäß Anspruch 2, wobei das Auswählen (115) des Speicherplatzes auf zumindest einem Element der Gruppe von letzte Nutzung des benutzerspezifischen Datensatzes, der in dem Speicherplatz gespeichert ist, und Nutzungshäufigkeit des benutzerspezifischen Datensatzes, der in dem Speicherplatz gespeichert ist, basiert.

4. Das Verfahren gemäß einem der Ansprüche 2 oder 3, wobei das kontinuierliche Überwachen (110) der verfügbaren Speicherkapazität ein Überwachen einer Nutzung der Mehrzahl von Speicherplätzen umfasst.

5. Das Verfahren gemäß Anspruch 1,
wobei das Erhalten (120) des neuen benutzerspezifischen Datensatzes ein Empfangen (122) des neuen benutzerspezifischen Datensatzes von einem Server umfasst,
oder wobei das Erhalten (120) des neuen benutzerspezifischen Datensatzes ein Abrufen (124) des neuen benutzerspezifischen Datensatzes aus einer Datenstruktur umfasst.

6. Das Verfahren gemäß einem der vorhergehenden Ansprüche, wobei das Auslagern (130) der Daten ferner ein Abrufen (132) der Daten von dem zweiten Steuergerät (500) und ein Speichern (134) der Daten in einer Datenstruktur auf dem ersten Steuergerät (100) des Fahrzeugs (1000), welches ein zentrales Steuergerät des Fahrzeugs ist, umfasst, wobei das erste Steuergerät den externen Speicher umfasst.

7. Das Verfahren gemäß einem der vorhergehenden Ansprüche,
wobei das Auslagern (130) ferner periodisch durchgeführt wird,
oder wobei das Auslagern (130) ferner durchgeführt wird, wenn die Daten geändert wurden.

8. Das Verfahren gemäß einem der vorhergehenden Ansprüche, ferner umfassend Aktivieren (150) des neuen benutzerspezifischen Datensatzes für das zweite Steuergerät (500), durch Anweisen des zweiten Steuergeräts, den neuen benutzerspezifischen Datensatz zu aktivieren, wobei die Aktivierung zur Veränderung von Fahrzeugeinstellungen führt.

9. Programm mit einem Programmcode zum Durchführen des Verfahrens gemäß einem der vorhergehenden Ansprüche, wenn der Programmcode auf einem Computer, einem Prozessor, einem Kontrollmodul oder einer programmierbaren Hardwarekomponente ausgeführt wird.

10. Vorrichtung für ein erstes Steuergerät (100) eines Fahrzeugs (1000), zum Verwalten eines Speicherbereichs eines zweiten Steuergeräts (500) des Fahrzeugs (1000) umfassend
eine Schnittstelle (12), ausgebildet zum Kommunikation mit dem zweiten Steuergerät (500);
ein Kontrollmodul (14), ausgebildet zum:
Überwachen der verfügbaren Speicherkapazität des Speicherbereichs, wobei das Überwachen der verfügbaren Speicherkapazität kontinuierlich durchgeführt wird,
Erhalten eines neuen benutzerspezifischen, auf Anweisung des ersten Steuergeräts durch das zweite Steuergerät aktivierbaren, Benutzereinstellungen des Fahrzeugs enthaltenden Datensatzes,
Auslagern von Daten aus dem Speicherbereich des zweiten Steuergeräts auf ein externes Speichermodul im Fahrzeug, falls die verfügbare Speicherkapazität zum Speichern des neuen benutzerspezifischen Datensatzes im Speicherbereich nicht ausreicht, und
anschließendes Speichern des erhaltenen neuen benutzerspezifischen Datensatzes im Speicherbereich.

## Claims

1. Method for managing a memory area of a second controller (500) of a vehicle (1000), the method being carried out by a first controller (100) of the vehicle by continuously monitoring (110) the available storage capacity of the memory area, wherein the memory area can be used to store one or more user-specific datasets containing user settings relating to the vehicle that are able to be activated by the second controller at the instruction of the first controller, the method comprising the following steps after a new user-specific dataset has been obtained (120):
transferring (130) data from the memory area of the second controller to an external memory in the vehicle if the available storage capacity is not sufficient for storing the new user-specific dataset in the memory area, the transfer (130) being carried out after the new user-specific dataset has been obtained; and
subsequently storing (140) the new user-specific dataset in the memory area.

2. Method according to one of the preceding claims, wherein the memory area comprises a plurality of storage locations, one storage location providing storage for one dataset, further comprising selecting (115) one storage location from the plurality of storage locations, wherein the transfer (130) of the data transfers the data from the selected storage location and wherein the storage (140) of the new user-specific dataset uses the selected storage location.

3. Method according to Claim 2, wherein the selection (115) of the storage location is based on at least one element of the group of last use of the user-specific dataset stored in the storage location and the frequency of use of the user-specific dataset stored in the storage location.

4. Method according to either of Claims 2 and 3, wherein the continuous monitoring (110) of the available storage capacity comprises monitoring a usage of the plurality of storage locations.

5. Method according to Claim 1, wherein the obtaining (120) of the new user-specific dataset comprises receiving (122) the new user-specific dataset from a server, or wherein the obtaining (120) of the new user-specific dataset comprises retrieving (124) the new user-specific dataset from a data structure.

6. Method according to one of the preceding claims, wherein the transfer (130) of the data further comprises retrieving (132) the data from the second controller (500) and storing (134) the data in a data structure on the first controller (100) of the vehicle (1000), which is a central controller of the vehicle, the first controller comprising the external memory.

7. Method according to one of the preceding claims, wherein the transfer (130) is further carried out periodically,
or wherein the transfer (130) is further carried out when the data have been modified.

8. Method according to one of the preceding claims, further comprising activating (150) the new user-specific dataset for the second controller (500) by instructing the second controller to activate the new user-specific dataset, the activation leading to the alteration of vehicle settings.

9. Program containing a program code for carrying out the method according to one of the preceding claims when the program code is executed on a computer, a processor, a control module or a programmable hardware component.

10. Device for a first controller (100) of a vehicle (1000) for managing a memory area of a second controller (500) of the vehicle (1000), comprising
an interface (12) configured for communication with the second controller (500);
a control module (14) configured for:
monitoring the available storage capacity of the memory area, the monitoring of the available storage capacity being carried out continuously,
obtaining a new user-specific dataset containing user settings relating to the vehicle that are able to be activated by the second controller at the instruction of the first controller,
transferring data from the memory area of the second controller to an external storage module in the vehicle if the available storage capacity is not sufficient for storing the new user-specific dataset in the memory area, and
subsequently storing the new user-specific dataset obtained in the memory area.

## Revendications

1. Procédé de gestion d'une zone de mémoire d'un deuxième contrôleur (500) d'un véhicule (1000), le procédé étant mis en œuvre par un premier contrôleur (100) du véhicule au moyen de la surveillance continue (110) de la capacité de mémoire disponible de la zone de mémoire, un ou plusieurs jeux de données spécifiques à l'utilisateur, contenant des réglages d'utilisateur du véhicule activables sur instruction du premier contrôleur par le deuxième contrôleur, pouvant être mémorisés dans la zone de mémoire, le procédé comprenant les étapes suivantes après l'obtention (120) d'un nouveau jeu de données spécifique à l'utilisateur :
délocalisation (130) de données de la zone de mémoire du deuxième contrôleur sur une mémoire externe dans le véhicule dans le cas où la capacité de mémoire disponible pour mémoriser le nouveau jeu de données spécifique à l'utilisateur dans la zone de mémoire n'est pas suffisante, la délocalisation (130) étant exécutée après l'obtention du nouveau jeu de données spécifique à l'utilisateur ; et
ensuite mémorisation (140) du nouveau jeu de données spécifique à l'utilisateur dans la zone de mémoire.

2. Procédé selon l'une des revendications précédentes, la zone de mémoire comportant une pluralité d'emplacements de mémoire, un emplacement de mémoire offrant de la mémoire pour un jeu de données, comportant en outre la sélection (115) d'un emplacement de mémoire de la pluralité d'emplacements de mémoire, la délocalisation (130) des données délocalisant les données hors de l'emplacement de mémoire sélectionné et la mémorisation (140) du nouveau jeu de données spécifique à l'utilisateur utilisant l'emplacement de mémoire sélectionné.

3. Procédé selon la revendication 2, la sélection (115) de l'emplacement de mémoire se basant sur au moins un élément du groupe de la dernière utilisation du jeu de données spécifique à l'utilisateur qui est mémorisé dans l'emplacement de mémoire, et la fréquence d'utilisation du jeu de données spécifique à l'utilisateur qui est mémorisé dans l'emplacement de mémoire.

4. Procédé selon l'une des revendications 2 ou 3, la surveillance continue (110) de la capacité de mémoire disponible comprenant une surveillance d'une utilisation de la pluralité d'emplacement de mémoire.

5. Procédé selon la revendication 1, l'obtention (120) du nouveau jeu de données spécifique à l'utilisateur comprenant une réception (122) du nouveau jeu de données spécifique à l'utilisateur de la part d'un serveur, et l'obtention (120) du nouveau jeu de données spécifique à l'utilisateur comprenant une invocation (124) du nouveau jeu de données spécifique à l'utilisateur auprès d'une structure de données.

6. Procédé selon l'une des revendications précédentes, la délocalisation (130) des données comprenant en outre une invocation (132) auprès du deuxième contrôleur (500) et une mémorisation (134) des données dans une structure de données sur le premier contrôleur (100) du véhicule (1000), lequel est un contrôleur central du véhicule, le premier contrôleur comprenant la mémoire externe.

7. Procédé selon l'une des revendications précédentes, la délocalisation (130) étant en outre effectuée périodiquement, et la délocalisation (130) étant en outre effectuée lorsque les données ont été modifiées.

8. Procédé selon l'une des revendications précédentes, comprenant en outre l'activation (150) du nouveau jeu de données spécifique à l'utilisateur pour le deuxième contrôleur (500) en ordonnant au deuxième contrôleur d'activer le nouveau jeu de données spécifique à l'utilisateur, l'activation donnant lieu à une modification des réglages du véhicule.

9. Programme comprenant un code de programme destiné à mettre en œuvre le procédé selon l'une des revendications précédentes lorsque le code de programme est exécuté sur un ordinateur, un processeur, un module de contrôle ou un composant matériel programmable.

10. Dispositif pour un premier contrôleur (100) d'un véhicule (1000), destiné à la gestion d'une zone de mémoire d'un deuxième contrôleur (500) du véhicule (1000), comprenant
une interface (12), configurée pour la communication avec le deuxième contrôleur (500) ;
un module de contrôle (14), configuré pour :
surveiller la capacité de mémoire disponible de la zone de mémoire, la surveillance de la capacité de mémoire disponible étant effectuée en continu,
obtenir un nouveau jeu de données spécifique à l'utilisateur, contenant des réglages d'utilisateur du véhicule activables sur instruction du premier contrôleur par le deuxième contrôleur,
délocalisation de données de la zone de mémoire du deuxième contrôleur sur un module de mémoire externe dans le véhicule dans le cas où la capacité de mémoire disponible pour mémoriser le nouveau jeu de données spécifique à l'utilisateur dans la zone de mémoire n'est pas suffisante, et
ensuite mémorisation du nouveau jeu de données spécifique à l'utilisateur dans la zone de mémoire.
